# EUROPÄISCHE PATENTSCHRIFT

(11) **EP 1 969 821 B1**
(45) Veröffentlichungstag und Bekanntmachung des Hinweises auf die Patenterteilung: **22.06.2011**
(21) Anmeldenummer: 06819749.0
(22) Anmeldetag: 24.11.2006
(51) Int. Cl.: H04M 1/60, G08B 13/14, B60R 11/02, H04M 1/725

(54) **ELEKTRONISCHES GERÄT FÜR DEN EINBAU IN EIN KRAFTFAHRZEUG ZUR UNTERSTÜTZUNG DES WIEDERAUFFINDENS DES GERÄTS NACH EINEM DIEBSTAHL**
ELECTRONIC DEVICE TO BE INCORPORATED INTO A MOTOR VEHICLE IN ORDER TO HELP RETRIEVE THE DEVICE FOLLOWING A THEFT
APPAREIL ELECTRONIQUE DESTINE A ETRE MONTE DANS UN VEHICULE, CONÇU POUR FACILITER LA DETECTION DE L'APPAREIL A LA SUITE D'UN VOL

(30) Priorität: 14.12.2005 DE 102005059766
(43) Veröffentlichungstag der Anmeldung: 17.09.2008
(73) Patentinhaber: Continental Automotive GmbH, 30165 Hannover (DE)
(72) Erfinder: JATSCHKA, Thomas, A-2102 Klein Engersdorf (AT); POHL, Alfred, A-2130 Mistelbach (AT); TSCHOFEN, Robert, A-1140 Wien (AT); ZIMMERMANN, Gernot, A-1130 Wien (AT)
(86) Internationale Anmeldenummer: PCT/EP2006/068883
(87) Internationale Veröffentlichungsnummer: WO 2007/068566

(56) Entgegenhaltungen:
- DE-A1- 10 028 899
- DE-U1- 20 310 146
- GB-A- 2 397 467
- GB-A- 2 414 325
- US-A1- 2003 227 381
- US-A1- 2004 203 601
- US-A1- 2005 143 134

## Beschreibung

Die Erfindung betrifft ein elektronisches Gerät für den Einbau in ein Kraftfahrzeug mit einem Funkmodul zur Herstellung einer Kurzstreckenfunkverbindung zu einem berechtigten Mobiltelefon, wobei ein berechtigtes Mobiltelefon anhand einer in einem Speicherelement des elektronischen Geräts abgelegten Kennung des berechtigten Mobiltelefons identifiziert wird. Ein derartiges elektronisches Gerät ist in Form eines Autoradios aus der EP 1 052 834 A2 bekannt.

Elektronische Einbaugeräte von Kraftfahrzeugen, wie beispielsweise Autoradios oder Navigationsgeräte, sind begehrt und werden relativ häufig aus Kraftfahrzeugen entwendet. Als Diebstahlschutz für Autoradios und Navigationssysteme ist es aus der DE 100 28 899 A1 bekannt, nach Unterbrechung der Spannungsversorgung des Autoradios zunächst einen Code einzugeben. Der Entwender muss somit in den Besitz des Codes gelangen. Dies kann beispielsweise durch entsprechendes Ausprobieren geschehen. Des Weiteren ist es bekannt, ein Bedienteil eines Autoradios abnehmbar zu gestalten, so dass der Fahrer beim Verlassen des Fahrzeugs das Bedienteil aus dem Fahrzeug mitnehmen kann. Hierbei ist somit eine Handlung des Fahrers erforderlich. In vielen Fällen verbleibt daher das Bedienteil im Kraftfahrzeug. Diese beiden bekannten Methoden zeigen daher nur eine beschränkte Wirkung. Insbesondere erschweren sie lediglich eine erneute Inbetriebnahme des Autoradios nach einem Diebstahl, unterstützen jedoch nicht das Wiederauffinden des entwendeten Autoradios.

Aus der GB-A-2 397 467 und US 2004/203601 A1 ist es bekannt, eine Verbindung zu einem gestohlenen Mobiltelefon ferneingeschaltet oder mittels einer Nottaste zu initialisieren und die Position des Mobiltelefons dadurch zu übermitteln. Diese Verfahren beziehen sich auf den Diebstahl eines Mobiltelefons und nicht auf den Diebstahl eines Geräts, das mit einem Mobiltelefon kommuniziert.

Aus der GB-A-2 414 325 ist es bekannt, einen Alarm zu geben, wenn die Entfernung zwischen einem Mobiltelefon und.einem tragbaren Gerät größer wird. Hier wird keine telefonische Verbindung hergestellt.

Aus der US 2003/227381 A1 und US 2005/143134 A1 ist es bekannt, Geräte zu überwachen und telefonische Verbindungen zu einem Mobiltelefon herzustellen, wenn ein Diebstahlsversuch mit Hilfe von Sensoren delektiert wird. Die Geräte sind jedoch nicht für die Kommunikation mit einem Mobiltelefon durch eine Kurzstreckenfunkverbindung konzipiert.

Aufgabe der Erfindung ist es daher, ein elektronisches Gerät und ein Verfahren anzugeben, das ein Wiederauffinden des elektronischen Geräts nach einem Diebstahl unterstützt.

Die Aufgabe wird durch ein elektronisches Gerät bzw. ein Verfahren mit den Merkmalen des jeweiligen unabhängigen Anspruchs gelöst.

Das elektronische Gerät für den Einbau in ein Kraftfahrzeug weist ein Funkmodul zur Herstellung einer Kurzstreckenfunkverbindung zu einem berechtigten Mobiltelefon auf, wobei das berechtigte Mobiltelefon anhand einer in einem Speicherelement des elektronischen Geräts abgelegten Kennung des berechtigten Mobiltelefons identifiziert wird. Weiterhin weist das elektronische Gerät Mittel zum Detektieren eines Ausbaus des elektronischen Geräts aus einem Kraftfahrzeug auf. Hierzu kann eine elektrische Verbindung des elektronischen Geräts zu einem Spannungsversorgungsnetz des Kraftfahrzeugs überwacht werden, wobei eine Unterbrechung der Spannungsversorgung als Ausbau des elektronischen Geräts gewertet wird. Bewerten die Mittel zum Detektieren des Ausbaus des elektronischen Geräts zusätzlich die Zeitdauer zwischen dem Ausschalten einer Zündung des Kraftfahrzeugs und der Unterbrechung der Spannungsversorgung, so kann erreicht werden, dass ein Ausbau des elektronischen Geräts zu Servicezwecken, beispielsweise innerhalb von zwei Minuten nach Ausschalten der Zündung des Kraftfahrzeuges nicht als Ausbau aufgrund eines Diebstahls detektiert wird und die nachfolgend beschriebenen Sicherungsmaßnahmen unterbleiben. Alternativ oder zusätzlich kann ein Ausbau des elektronischen Geräts auch über einen mechanisch betätigbaren Schalter detektiert werden. Ein solcher Schalter, der sich beispielsweise am Gehäuse des elektronischen Geräts befindet und im eingebauten Zustand durch ein Halteelement des Kraftfahrzeugs geschlossen wird, öffnet beim Ausbau des Geräts aus dem Kraftfahrzeug und liefert so die entsprechende Information über den Ausbau.

Das erfindungsgemäße elektronische Gerät weist weiterhin Mittel zur automatischen Herstellung einer Kurzstreckenfunkverbindung zu einem weiteren Mobiltelefon und zur automatischen Initialisierung einer Mobilfunkverbindung mit dem weiteren Mobiltelefon auf, wobei diese Maßnahmen nur dann ergriffen werden, wenn nach einer erneuten Inbetriebnahme des elektronischen Geräts nach einem detektierten Ausbau eine Kennung des weiteren Mobiltelefons erstmals in dem Speicherelement abgespeichert werden soll öder abgespeichert worden ist.

Um zu verhindern, dass ein elektronisches Gerät mit einem Funkmodul zur Herstellung einer Kurzstreckenfunkverbindung mit jedem Mobiltelefon, das in den Reichweitenbereich des Funkmoduls gelangt, eine Mobilfunkverbindung aufbauen kann, muss ein berechtigtes Mobiltelefon an dem elektronischen Gerät angemeldet werden (sog. "pairing"). Dies geschieht dadurch, dass in dem elektronischen Gerät eine Kennung des berechtigten Mobiltelefons abgelegt wird. Ein nicht am elektronischen Gerät angemeldetes Mobiltelefon kann nicht zusammen mit dem elektronischen Gerät benutzt werden. Wird nun nach der Entwendung des elektronischen Geräts versucht, ein weiteres Mobiltelefon an dem elektronischen Gerät anzumelden, indem eine Kennung des weiteren Mobiltelefons erstmals in dem Speicherelement abgespeichert werden soll, so wird automatisch eine Kurzstreckenfunkverbindung zu dem weiteren Mobiltelefon hergestellt und eine Mobilfunkverbindung mit dem weiteren Mobiltelefon initialisiert. Alternativ oder zusätzlich kann derselbe Vorgang auch dann ablaufen, wenn die Kennung des weiteren Mobiltelefons zwar bereits in dem Speicherelement abgespeichert ist, diese Abspeicherung jedoch nach erneuter Inbetriebnahme des elektronischen Geräts nach einem detektierten Ausbau erfolgt ist. Hierdurch wird erreicht, dass bei jedem Eintreten des weiteren Mobiltelefons in den Reichweitenbereich des Funkmoduls eine entsprechende Mobilfunkverbindung automatisch aufgebaut wird.

Ist in einem Speicherelement des elektronischen Geräts eine Telefonnummer abgespeichert, die bei der automatischen Initialisierung der Mobilfunkverbindung angewählt wird, so kann eine Servicezentrale oder auch der Eigentümer des elektronischen Geräts über die Wiederinbetriebnahme des elektronischen Geräts informiert werden. Hierzu kann beispielsweise eine SMS abgesandt werden oder ein vorgegebener Sprachtext übermittelt werden. Wird hierbei die abgespeicherte Kennung oder eine sonstige Kennung des weiteren Mobiltelefons übermittelt, so kann anhand dieser Kennung der Inhaber des weiteren Mobiltelefons ermittelt werden, der nunmehr im Besitz des elektronischen Geräts ist. Insbesondere kann hierbei die Telefonnummer des weiteren Mobiltelefons übermittelt werden. Da nunmehr der Besitzer des elektronischen Geräts bekannt ist, können die entsprechenden Maßnahmen zur Wiederbeschaffung des Geräts in die Wege geleitet werden.

Handelt es sich bei dem Speicherelement des elektronischen Geräts um ein geschütztes Speicherelement, so können Manipulationen an dem Speicherelement, die beispielsweise dazu dienen, die abgespeicherte Telefonnummer oder eine im Speicherelement abgespeicherte Information über den detektierten Ausbau des elektronischen Geräts zu verändern, verhindert werden. Beispielsweise kann hierzu eine Änderung der genannten Informationen in dem Speicherelement nur nach Eingabe eines Codes, Auslesen einer entsprechenden SIM-Karte oder bei eingelegter Code-CD möglich sein.

Weist das elektronische Gerät ein Positionsbestimmungsmodul auf und wird mit der automatisch initialisierten Mobilfunkverbindung eine durch das Positionsbestimmungsmodul ermittelte Position des elektronischen Geräts übermittelt, kann das Auffinden des elektronischen Geräts weiter erleichtert werden.

Weist die Kurzstreckenfunkverbindung eine Reichweite von nicht mehr von 100 m, vorzugsweise von nicht mehr als 10 m auf, so dann die Sendeleistung klein gehalten werden und die Zahl der sich im Reichweitenbereich der Kurzstreckenfunkverbindung befindlichen Mobiltelefone, bei denen geprüft werden muss, ob sie am elektronischen Gerät angemeldet sind, bleibt überschaubar.

Ist die Kurzstreckenfunkverbindung als bidirektionale Kurzstreckenfunkverbindung ausgebildet, so können auch von dem Mobiltelefon Signale an das elektronische Gerät übermittelt werden, so dass das elektronische Gerät auch als Freisprecheinrichtung ausgebildet sein kann oder Bestandteil einer Freisprecheinrichtung sein kann.

Erfolgt die Kurzstreckenfunkverbindung nach dem Bluetooth-Verfahren, so können standardisierte Funkmodule eingesetzt werden. Das Bluetooth-Verfahren wurde als Kurzstreckenkommunikationsverfahren mit Reichweiten von typischerweise 10 m entwickelt. Die Übertragungsleistung ist mit 1 Milliwatt sehr gering. Zur Übertragung ist das Frequenzband von 2,4 Gigahertz vorgesehen. Bluetoothfunkmodule werden bereits bei kommerziellen Autoradios zur Realisierung einer Freisprecheinrichtung eingesetzt.

Bei dem elektronischen Gerät kann es sich um ein Informations- und/oder Unterhaltungsgerät, insbesondere ein Autoradio, ein Navigationssystem oder ein Multimediagerät, oder ein Mautgerät handeln.

Ein Verfahren zum Betreiben einer Diebstahlsicherungseinrichtung eines elektronischen Geräts für ein Kraftfahrzeug, wobei das elektronische Gerät ein Funkmodul zur Herstellung einer Kurzstreckenfunkverbindung zu einem berechtigten Mobiltelefon aufweist, das anhand einer in einem Speicherelement abgelegten Kennung identifiziert wird, weist die folgenden Verfahrensschritte auf:
- Prüfen, ob eine Inbetriebnahme des elektronischen Geräts nach einem detektierten Ausbau des Geräts erfolgt und, falls dies der Fall ist,
- Prüfen, ob eine Kennung des weiteren Mobiltelefons nach dem detektierten Ausbau erstmals in dem Speicherelement abgespeichert werden soll oder abgespeichert worden ist und, falls dies der Fall ist,
- Automatisches Herstellen einer Kurzstreckenfunkverbindung zu dem weiteren Mobiltelefon, falls eine solche nicht bereits besteht, und automatische Initialisierung einer Mobilfunkverbindung mit dem.weiteren Mobiltelefon.

Weitere Ausgestaltungen des Verfahrens sind in den Unteransprüchen angegeben.

Die Erfindung wird nachfolgen anhand eines Ausführungsbeispiels in der Zeichnung näher erläutert. Es zeigen:
- Fig. 1:: ein Autoradio und dessen Kopplung zu einem Mobilte- lefon,
- Fig. 2:: ein Blockschaltbild mit den wesentlichen Komponen- ten des Autoradios und des Mobiltelefons,
- Fig. 3:: ein Flussdiagramm des Verfahrensablaufs.

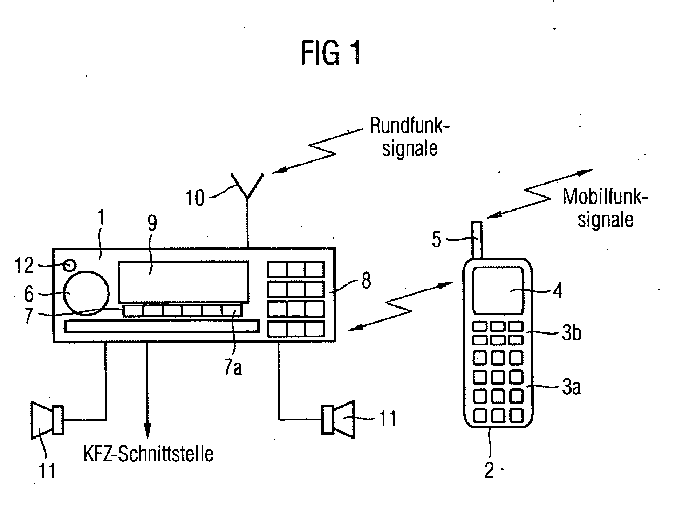

Fig. 1 zeigt ein Ausführungsbeispiel eines Kommunikationssystems mit einem als Autoradio ausgebildeten Rundfunkgerät 1 und einem Mobiltelefon 2. Das Mobiltelefon weist in an sich bekannter Weise mehrere Bedienelemente 3 und eine Anzeigeeinheit (Display) 4 auf. Über die Bedienelemente 3 erfolgt beispielsweise die Wahl einer Telefonnummer, die Annahme eines eingehenden Telefongesprächs, der Aufruf eines Telefonbuchs u. s. w. Im Display 4 werden beispielsweise die gewählte Telefonnummer und weitere Statusinformationen angezeigt. Der Empfang und das Aussenden von Mobilfunksignalen erfolgt über die Mobilfunkantenne 5.

Das Rundfunkgerät 1 weist mehrere Gruppen von Bedienelementen 6, 7, 8 auf. Über das Bedienelement 6 kann beispielsweise die Lautstärke des Rundfunkgeräts 1 eingestellt werden. Über die Bedienelemente 7 können weitere Funktionen, wie beispielsweise die Auswahl eines abgespeicherten Senders, ausgeführt werden. Die Bedienelemente 8 sind als Nummernblock ausgebildet und entsprechen insoweit den Bedienelementen 3a des Mobiltelefons 2. Über die Bedienelemente 8 kann somit eine Telefonnummer gewählt werden. Der Rundfunkempfänger weist weiterhin eine Anzeigeeinheit (Display) 9 auf. Im Rundfunkbetrieb werden im Display 9 beispielsweise der eingestellte Sender und sonstige Statusinformationen angezeigt. Bei Wahl einer Telefonnummer über die Bedienelemente 8 kann die gewählte Telefonnummer im Display 9 angezeigt werden. Bei einem eingehenden Anruf kann ebenso die Telefonnummer des Anrufenden im Display 9 angezeigt werden. Anstelle der Anzeige der Telefonnummer ist es auch möglich, den Namen des Anrufenden auf dem Display 9 anzuzeigen, wenn eine Zuordnung von Namen und Telefonnummern in einem Speicherelement des Rundfunkempfängers oder des Mobiltelefons abgelegt ist.

Das Rundfunkgerät 1 weist weiterhin eine Rundfunkantenne 10 zum Empfang von Rundfunksignalen auf. Als akustische Ausgabeeinheit sind mit dem Rundfunkgerät 1 Lautsprecher 11 verbunden.

Weiterhin ist in das Rundfunkgerät 1 ein Mikrophon integriert. Über eine Kurzstreckenfunkverbindung steht das Rundfunkgerät 1 in Verbindung mit dem Mobiltelefon 2, so dass das Rundfunkgerät 1 mit dem Mikrophon 12 und den Lautsprechern 11 als Freisprecheinheit für das Mobiltelefon 2 dient.

Damit das Rundfunkgerät 1 über die Kurzstreckenverbindung nicht mit jedem Mobiltelefon innerhalb seines Reichweitenbereichs in Verbindung tritt und über jedes dieser Mobiltelefone Gespräche geführt werden können, wird ein berechtigtes Mobiltelefon an dem Rundfunkgerät 1 angemeldet. Hierbei wird eine Kennung des berechtigten Mobiltelefons 2 in ein Speicherelement des Rundfunkgeräts 1 abgespeichert. Nur solche Mobiltelefone, deren Kennung in dem Rundfunkgerät 1 abgespeichert ist, können somit zusammen mit dem Rundfunkgerät 1 benutzt werden.

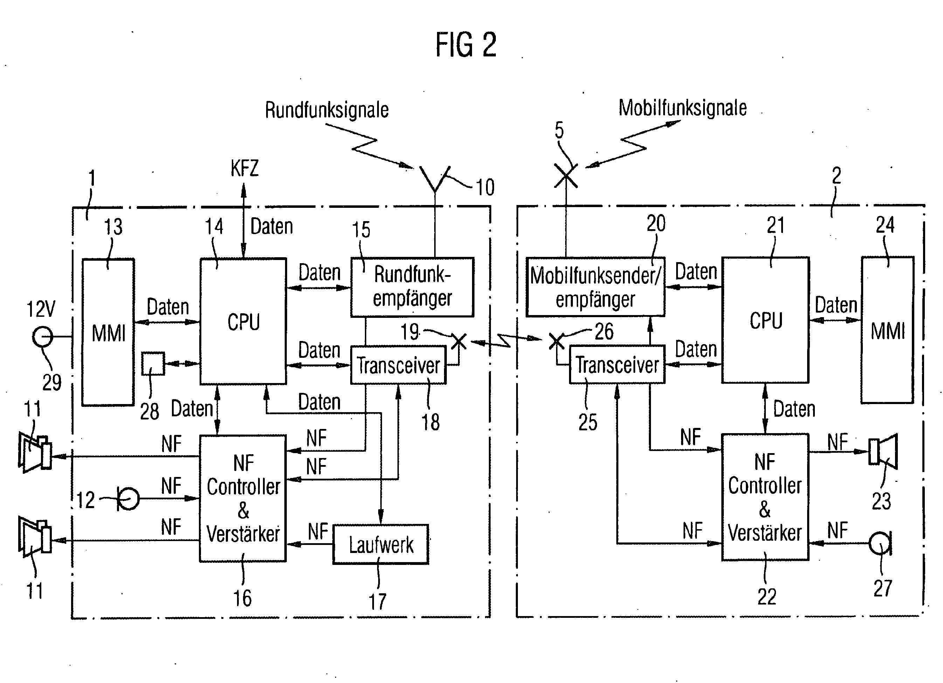

Fig. 2 zeigt ein vereinfachtes Blockschaltbild des Rundfunkgeräts 1 und des Mobiltelefons 2. Das Rundfunkgerät 1 enthält eine Bedieneinheit (MMI) 13, die beispielsweise die Bedienelemente 6, 7 und 8 der Fig. 1 aufweist. Die Bedieneinheit 13 ist mit einer Mikroprozessoreinheit (CPU) 14 verbunden. Die CPU 14 setzt die von der Bedieneinheit 13 kommenden Signale in Steuerbefehle um. Zum Empfang von Rundfunkprogrammen weist das Rundfunkgerät 1 eine Rundfunkantenne 10 auf, die mit einer Rundfunksempfangseinheit 15 verbunden ist. Die Rundfunksempfangseinheit 15 wird von der CPU 14 angesteuert, beispielsweise zur Auswahl der Rundfunkssignale eines bestimmten Senders. In der Rundfunksempfangseinheit 15 werden die Rundfunksignale, die über die Rundfunkantenne 10 empfangen werden, in bekannter Weise in Niederfrequenz-(NF)-Signale umgesetzt. Die Niederfrequenzsignale werden in einem NF-Controller und -Verstärker 16 verstärkt und den Lautsprechern 11 zur akustischen Wiedergabe zugeführt. Weiterhin enthält das Rundfunkgerät 1 ein Laufwerk 17, so dass beispielsweise Musik von einer CD oder von einer Musikkassette wiedergegeben werden kann. Das Laufwerk 17 wird ebenfalls von der CPU 14 angesteuert. Die vom Laufwerk 17 ausgegebenen Niederfrequenzsignale werden dem NF-Controller und -Verstärker 16 zugeführt und dann ebenfalls über die Lautsprecher 11 ausgegeben. Mit der CPU 14 ist weiterhin ein Speicherelement 28 verbunden, in dem insbesondere die Kennung berechtigter Mobiltelefone abgespeichert ist.

Darüber hinaus enthält das Rundfunkgerät 1 eine Sende- und Empfangseinrichtung (Transceiver) 18 mit einer Antenne 19 zur Herstellung einer Kürzstreckenfunkverbindung zu dem Mobiltelefon 2. Der Transceiver 18 wird ebenfalls von der CPU 14 angesteuert. Der Transceiver 18 ist mit dem NF-Controller und -Verstärker 16 verbunden. Somit können vom Mobiltelefon 2 über die Kurzstreckenfunkverbindung an der Antenne 19 eingehende Sprachsignale über den Transceiver 18 an den NF-Controller und -Verstärker 16 weitergeleitet und über die Lautsprecher 11 ausgegeben werden. Sprachsignale eines

Benutzers werden von dem Mikrophon 12 aufgefangen und über den NF-Controller und -Verstärker 16 dem Transceiver 18 und der Antenne 19 zugeführt und über die Kurzstreckenfunkverbindung zum Mobiltelefon 2 übertragen.

Die Spannungsversorgung des Rundfunkgeräts 1 wird durch eine elektrische Verbindung 29 mit einem Spannungsversorgungsnetz des Kraftfahrzeugs hergestellt.

Das Mobiltelefon 2 weist eine Mobilfunkantenne 5 auf, die mit einer Sende-/Empfangseinheit 20 für Mobilfunksignale verbunden ist. Die Sende-/Empfangseinheit 20 wird von einer CPU 21 angesteuert. Die empfangenen Mobilfunksignale werden in der Sende-/Empfangseinheit 20 in NF-Signale umgewandelt, die einen NF-Controller und -Verstärker 22 zugeführt werden. Im Mobilfunkbetrieb können die NF-Signale über einen im Mobiltelefon 2 integrierten Lautsprecher 23 ausgegeben werden. Die Sprachsignale des Telefonbenutzers können über das Mikrophon 27 des Mobiltelefons 2 dem NF-Controller und -Verstärker 22 zugeführt und von dort über die Sende-/Empfangseinheit 20 und die Mobilfunkantenne 5 zu einer stationären Mobilfunkstation und schließlich zum Gesprächspartner weitergeleitet werden. Das Mobiltelefon weist weiterhin eine Bedieneinheit 24 zur Wahl einer Telefonnummer und weiterer Telefonfunktionen auf. Weiterhin weist das Mobiltelefon eine zweite Sende-/Empfangseinheit (Transceiver) 25 auf, die mit einer Antenne 26 verbunden ist. Der Transceiver 25 ist mit dem NF-Controller und -Verstärker 22 verbunden und wird von der CPU 21 angesteuert.

Das in den Figuren 1 und 2 dargestellte Kommunikationssystem kann als Freisprecheinheit betrieben werden. Dazu werden über die Mobilfunkantenne 5 eingehende Mobilfunksignale über die Sende-/Empfangseinheit 20 nach Umwandlung in NF-Signale an den NF-Controller und -Verstärker 22 weitergeführt und von dort an den Transceiver 25 übermittelt. Vom Transceiver 25 werden die NF-Signale über die Antenne 26 über eine Kurzstreckenfunkverbindung bei einer Frequenz von beispielsweise 2,4 Gigahertz an die Antenne 19 des Rundfunkgeräts 1 übermittelt und von dort in zuvor beschriebener Weise über die Lautsprecher 11 ausgegeben. Umgekehrt werden die von der Antenne 19 des Rundfunkgeräts über die Kurzstreckenfunkverbindung übermittelten Sprachsignale von der Antenne 26 des Mobiltelefons 2 aufgefangen und über den Transceiver 25 an den NF-Controller weitergegeben. Im Transceiver 25 erfolgt dabei eine Umwandlung der Funksignale in NF-Signale. Vom NF-Controller 22 werden die NF-Signale dann an die erste Sende-/Empfangseinheit 20 weitergegeben. Nach Umwandlung der eingehenden NF-Signale in Mobilfunksignale in der Sende/Empfangseinheit 20 erfolgt schließlich die Übermittlung zur stationären Mobilfunkstation über die Mobilfunkantenne 5.

Die Transceiver 18 bzw. 25 arbeiten im Ausführungsbeispiel nach dem an sich bekannten Bluetoothverfahren.

Soweit handelt es sich um einen bestimmungsgemäßen Gebrauch des Rundfunkgeräts in Kombination mit einem Mobiltelefon, wobei das Rundfunkgerät als Freisprecheinrichtung dient.

Bei der erfindungsgemäßen Ausgestaltung des Rundfunkgeräts sind nunmehr weiterhin Mittel zum Detektieren eines Ausbaus des Rundfunkgeräts aus einem Kraftfahrzeug vorhanden. Hierbei wird die elektrische Verbindung des elektronischen Geräts zu dem Spannungsversorgungsnetz des Kraftfahrzeuges überwacht. Wird diese Verbindung unterbrochen, so wird beispielsweise eine entsprechende Information in dem Speicherelement 28 abgelegt. Um ein Abspeichern dieser Information nach Unterbrechung der Versorgungsspannung noch sicherzustellen, ist für den kurzzeitigen Weiterbetrieb der CPU 14 beispielsweise ein in der Zeichnung nicht dargestellter Kondensator vorgesehen, der die Spannungsversorgung kurzzeitig aufrechterhält. Das Detektieren einer Unterbrechung der Spannungsversorgung kann auch in der gleichen Weise erfolgen, wie dies bei Autoradios erfolgt, die durch einen Code gesichert sind.

Die erfindungsgemäß weiterhin vorgesehenen Mittel zur automatischen Herstellung einer Kurzstreckenfunkverbindung zur einem weiteren Mobiltelefon und zur automatischen Initialisierung einer Mobilfunkverbindung mit dem weiteren Mobiltelefon, wenn nach einer erneuten Inbetriebnahme des elektronischen Geräts nach einem detektierten Ausbau eine Kennung des zweiten Mobiltelefons erstmals in dem Speicherelement 28 abgespeichert werden soll öder abgespeichert worden ist, sind als Computerprogramm ausgeführt und Bestandteil der Firmware des Rundfunkgeräts.

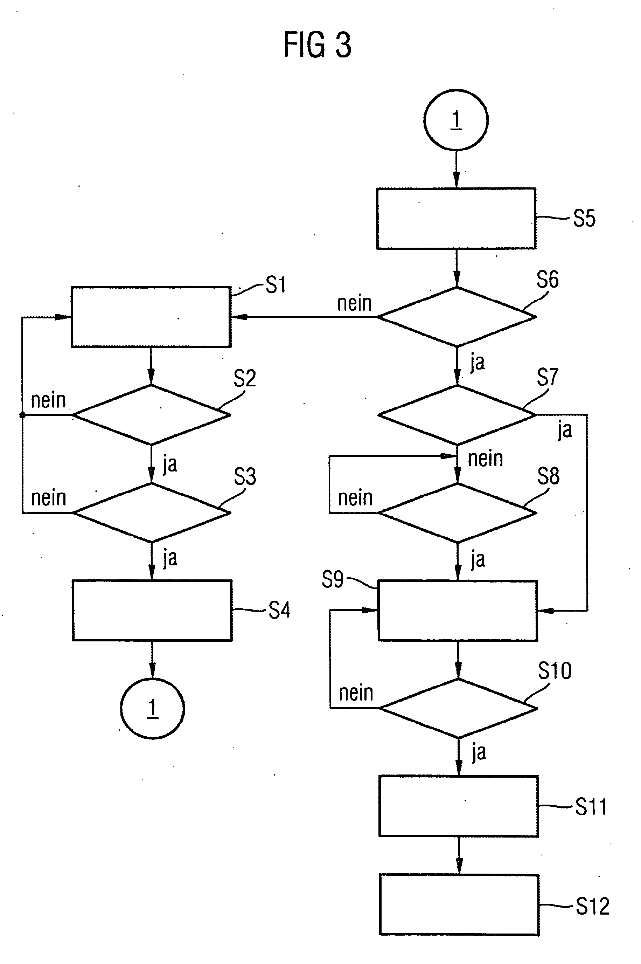

Das erfindungsgemäße Rundfunkgerät 1 bietet daher die Möglichkeit, einen Ausbau des Rundfunkgeräts 1 aus dem Fahrzeug zu detektieren, beispielsweise die Abtrennung der Spannungsversorgung. Wird das Rundfunkgerät 1 nach einem so detektierten Ausbau erneut in Betrieb genommen, so kann das Gerät als Rundfunkempfänger nutzbar sein. Alternativ kann auch für diese Funktion in herkömmlicher Weise die Eingabe eines Codes erforderlich sein. Das erfindungsgemäße Rundfunkgerät 1 erleichtert darüber hinaus jedoch sein Auffinden nach einer Entwendung. Soll das Rundfunkgerät nämlich zusammen mit einem weiteren Mobiltelefon als Freisprecheinrichtung verwendet werden, so ist es erforderlich, eine Kennung des weiteren Mobiltelefons in dem Speicherelement 28 des Rundfunkgeräts 1 abzuspeichern. Wird ein solcher Anmeldevorgang vorgenommen, der entweder manuell am Rundfunkgerät 1 oder durch eine Übermittlung der Kennung über die Kurzstreckenfunkverbindung erfolgen kann, so wird von dem Rundfunkgerät 1, soweit nicht schon geschehen, eine Kurzstreckenkurzverbindung zu dem weiteren Mobiltelefon hergestellt und zusätzlich anschließend eine automatische Initialisierung einer Mobilfunkverbindung mit dem weiteren Mobiltelefon durchgeführt. Über diese automatisch erzeugte Mobilfunkverbindung können nun entweder an eine Zentralstelle oder an den Eigentümer des Gerätes Daten übermittelt werden, die das Auffinden des Rundfunkgeräts 1 erleichtern. Das Verfahren wird anhand des Ablaufdiagramms der Fig. 3 näher erläutert.

In Schritt S1 wird davon ausgegangen, dass das Rundfunkgerät ordnungsgemäß in einem Kraftfahrzeug des Eigentümers eingebaut und genutzt wird. Das Rundfunkgerät ist an die Spannungsversorgung angeschlossen, in dem Speicher 28 ist die Kennung von einem oder mehreren berechtigten Mobiltelefonen abgelegt, die das Rundfunkgerät als Freisprecheinrichtung nutzen können. Weiterhin ist im Speicherelement 28 eine Notrufnummer abgelegt. In Schritt S2 wird nun abgefragt, ob die Spannungsversorgung des Rundfunkgeräts unterbrochen ist. Ist dies nicht der Fall, so wird die Schleife mit den Schritten S1 und S2 permanent durchlaufen. Wird in Schritt S2 dagegen festgestellt, dass die Spannungsversorgung unterbrochen wurde, so wird in Schritt S2 geprüft, ob die Zündung des Kraftfahrzeugs bereits länger als z. B. 2 min ausgeschaltet ist. Wurde die Zündung vor nicht länger als 2 min ausgeschaltet, so wird die Trennung der Spannungsversorgung vom Radiogerät nicht als unberechtigter Ausbau, das heißt Diebstahl, gewertet. Auf diese Weise kann das Rundfunkgerät beispielsweise innerhalb der genannten Zeitspanne für Servicezwecke ausgebaut werden, ohne das der Schutzmechanismus wirksam wird. Wird in Schritt S3 dagegen festgestellt, dass auch die Zündung bereits länger als zwei Minuten ausgeschaltet ist, so wird dies als ein unberechtigter Ausbau des Radiogeräts angesehen und eine entsprechende Information im Speicherelement 28 abgespeichert.

Nach einer erneuten Inbetriebnahme des Rundfunkgeräts in Schritt S5 wird in Schritt S6 geprüft, ob zuvor ein unberechtigter Ausbau des Rundfunkgeräts detektiert wurde, das heißt, ob im Speicherelement 28 die entsprechende Information abgespeichert ist. Ist dies nicht der Fall, so kann das Rundfunkgerät normal betrieben werden.

Wird dagegen in Schritt 6 festgestellt, dass ein unberechtigter Ausbau des Rundfunkgeräts detektiert wurde, so wird in Schritt S7 geprüft, ob seit dem detektierten Ausbau des Geräts eine neue Kennung eines weiteren Mobiltelefons in dem Speicherelement 28 abgespeichert wurde. Ist dies der Fall, wird in Schritt S9 eine Kurzstreckenfunkverbindung zu dem weiteren Mobiltelefon aufgebaut, falls eine solche nicht bereits besteht. In Schritt S10 wird geprüft, ob der Aufbau der Kurzstreckenfunkverbindung erfolgreich war. Ist dies nicht der Fall, so wird die Schleifen mit den Schritten S9 und S10 durchlaufen, bis ein erfolgreicher Verbindungsaufbau.durchgeführt wurde, wozu das weitere Mobiltelefon zumindest im Reichweitenbereich der Kurzstreckenfunkverbindung sein muss. Wird in Schritt S10 festgestellt, dass eine Kurzstreckenfunkverbindung zu dem weiteren Mobiltelefon, dessen Kennung erst nach dem detektierten Ausbau eingegeben wurde, aufgebaut wurde, so wird anschließend in Schritt S11 eine Mobilfunkverbindung mit dem weiteren Mobiltelefon initialisiert. Hierbei wird die im Speicherelement 28 abgespeicherte Notrufnummer angewählt. An die angewählte Notrufnummer werden nun entweder per SMS oder als Sprachnachricht von dem Rundfunkgerät Informationen über das angekoppelte weitere Mobiltelefon, das dem mutmaßlichen Entwender des Radiogeräts vermutlich gehört, übertragen. Hierbei kann es sich insbesondere um eine Kennung des weiteren Mobiltelefons, insbesondere dessen Rufnummer handeln. Anhand der übermittelten Rufnummer kann nun über den Mobilfunkanbieter der zugehörige Mobilfunkteilnehmer ermittelt werden und es können Maßnahmen zur Wiederbeschaffung des Rundfunkgerätes in die Wege geleitet werden.

Mittels der Mobilfunkverbindung können auch weitere Informationen, wie insbesondere eine Positionsangabe übermittelt werden, wenn das Rundfunkgerät mit einem Modul zur Positionsbestimmung, beispielsweise einem GPS-Modul, ausgerüstet ist. Hierdurch kann der Zugriff auf das entwendete Rundfunkgerät erleichtert werden.

Bei dem beschriebenen Verfahren wird somit bei jeder erneuten Inbetriebnahme des Rundfunkgeräts nach einem detektierten Ausbau versucht, über ein nach dem Ausbau an dem Rundfunkgerät erstmals angemeldetes Mobiltelefon eine Mobilfunkverbindung aufzubauen.

Wird in Schritt S7 festgestellt, dass nach dem detektierten Ausbau und erneuter Inbetriebnahme des Rundfunkgeräts noch keine neue Kennung eines weiteren Mobiltelefons abgespeichert wurde, so wird in Schritt S8 geprüft, ob aktuell eine neue Kennung eines weiteren Mobiltelefons eingegeben wird. Die Abfrage in Schritt S8 erfolgt permanent bzw. immer dann, wenn über einen entsprechenden Befehl die Anmeldung eines neuen Mobiltelefons gestartet wird. Wird in Schritt S8 detektiert, dass eine neue Kennung eines weiteren Mobiltelefons eingegeben werden soll, so wird, wie zuvor beschrieben, in den Schritten S9 bis S12 die Kurzstreckenfunkverbindung und die Mobilfunkverbindung aufgebaut und die Information, wie zuvor angegeben, übermittelt.

Die Erfindung wurde anhand eines Rundfunkgeräts beschrieben, ist jedoch auch für andere elektronische Geräte für Kraftfahrzeuge anwendbar, wie insbesondere ein Navigationssystem oder ein Mautgerät.

## Patentansprüche

1. Elektronisches Gerät für den Einbau in ein Kraftfahrzeug, wobei das elektronische Gerät ein Funkmodul (18) zur Herstellung einer Kurzstreckenfunkverbindung zu einem berechtigten Mobiltelefon (2) aufweist, wobei das berechtigte Mobiltelefon (2) anhand einer in einem Speicherelement (28) des elektronischen Geräts abgelegten Kennung des berechtigten Mobiltelefons (2) identifiziert wird, **dadurch gekennzeichnet, dass** das elektronische Gerät weiterhin aufweist:
- Mittel zum Detektieren eines Ausbaus des elektronischen Geräts aus einem Kraftfahrzeug und dass das Funkmodul (18) zur Herstellung einer Kurzstreckenfunkver-bindung zu einem weiteren Mobiltelefon geeignet ist, dass das elektronische Gerät weiterhin aufweist:
Mittel zur automatischen Initialisierung einer Mobilfunkverbindung mit dem weiteren Mobiltelefon, wenn nach einer erneuten Inbetriebnahme des elektronischen Geräts nach einem detektierten Ausbau eine Kennung des weiteren Mobiltelefons erstmals in dem Speicherelement (28) abgespeichert werden soll oder abgespeichert worden ist
und dass in dem Speicherelement (28) oder einem weiteren Speicherelement des elektronischen Geräts eine Telefonnummer abgespeichert ist, die bei der automatischen Initialisierung der Mobilfunkverbindung angewählt wird.

2. Elektronisches Gerät nach Anspruch 1, **dadurch gekennzeichnet, dass** es sich um ein geschütztes Speicherelement (28) handelt.

3. Elektronisches Gerät nach einem der vorhergehenden Ansprüche, **dadurch gekennzeichnet, dass** das elektronische Gerät zur Übermittlung der Kennung des weiteren Mobiltelefons über die automatisch initialisierte Mobilfunkverbindung ausgelegt ist.

4. Elektronisches Gerät nach einem der vorhergehenden Ansprüche, **dadurch gekennzeichnet, dass** die Mittel zum Detektieren eines Ausbaus des elektronischen Geräts eine elektrische Verbindung (29) des elektronischen Geräts zu einem Spannungsversorgungsnetz überwachen, wobei eine Unterbrechung der Spannungsversorgung als Ausbau des elektronischen Geräts gewertet wird.

5. Elektronisches Gerät nach Anspruch 4, **dadurch gekennzeichnet, dass** die Mittel zum Detektieren des Ausbaus des elektronischen Geräts zusätzlich die Zeitdauer zwischen dem Ausschalten einer Zündung des Fahrzeugs und der Unterbrechung der Spannungsversorgung bewerten.

6. Elektronisches Gerät nach einem der vorhergehenden Ansprüche, **dadurch gekennzeichnet, dass** die Mittel zum Detektieren des Ausbaus des elektronischen Geräts einen mechanisch betätigbaren Schalter aufweisen.

7. Elektronisches Gerät nach einem der vorhergehenden Ansprüche, **dadurch gekennzeichnet, dass** das elektronische Gerät ein Positionsbestimmungsmodul enthält und mit der automatisch initialisierten Mobilfunkverbindung eine durch das Positionsbestimmungsmodul ermittelte Position des elektronischen Geräts übermittelt wird.

8. Elektronisches Gerät nach einem der vorhergehenden Ansprüche, **dadurch gekennzeichnet, dass** die Kurzstreckenfunkverbindung eine Reichweite von nicht mehr als 100m, vorzugsweise von nicht mehr als 10m aufweist.

9. Elektronisches Gerät nach Anspruch 1, **dadurch gekennzeichnet, dass** die Kurzstreckenfunkverbindung eine bidirektionale Kurzstreckenfunkverbindung ist.

10. Elektronisches Gerät nach einem der vorhergehenden Ansprüche, **dadurch gekennzeichnet, dass** die Kurzstreckenfunkverbindung nach dem Bluetooth-Verfahren erfolgt.

11. Elektronisches Gerät nach einem der vorhergehenden Ansprüche, **dadurch gekennzeichnet, dass** das elektronische Gerät als Informations- und/oder Unterhaltungsgerät, insbesondere als Autoradio (1), Navigationssystem oder Multimediagerät, oder als Mautgerät ausgebildet ist.

12. Elektronisches Gerät nach einem der vorhergehenden Ansprüche, **dadurch gekennzeichnet, dass** das elektronische Gerät als Freisprecheinrichtung ausgebildet ist oder Bestandteil einer Freisprecheinrichtung ist.

13. Verfahren zum Betreiben einer Diebstahlsicherungseinrichtung eines elektronischen Geräts für ein Kraftfahrzeugs, wobei das elektronische Gerät ein Funkmodul (18) zur Herstellung einer Kurzstreckenfunkverbindung zu einem berechtigten Mobiltelefon (2) aufweist, das anhand einer in einem Speicherelement abgelegten Kennung identifiziert und geprüft wird, ob eine Inbetriebnahme des elektronischen Geräts nach einem detektierten Ausbau des Geräts erfolgt (S6) , **gekennzeichnet durch** die weiteren Verfahrensschritte, falls dies der Fall ist:
- Prüfen, ob eine Kennung eines Mobiltelefons nach dem detektierten Ausbau erstmals in einem Speicherelement (28) des elektronischen Geräts abgespeichert werden soll oder abgespeichert worden ist (S7) und falls dies der Fall ist,
- automatisches Herstellen einer Kurzstreckenfunkverbindung mittels des Funkmoduls (18) des elektronischen Geräts zu diesem Mobiltelefon (S9), falls eine solche noch nicht besteht, und automatische Initialisierung einer Mobilfunkverbindung mit diesem Mobiltelefon (S11), wobei in dem Speicherelement (28) oder einem weiteren Speicherelement des elektronischen Geräts eine Telefonnummer abgespeichert ist, die bei der automatischen Initialisierung der Mobilfunkverbindung angewählt wird.

14. Verfahren nach Anspruch 13, **dadurch gekennzeichnet, dass** die automatisch initialisierte Mobilfunkverbindung zu einer vorgegebenen Telefonnummer erfolgt.

15. Verfahren nach Anspruch 13 oder 14, **dadurch ge** - **kennzeichnet**, dass mit der automatisch initialisierten Mobilfunkverbindung eine Kennung des weiteren Mobiltelefons übermittelt wird.

16. Verfahren nach einem der vorhergehenden Ansprüche 13 bis 15, **dadurch gekennzeichnet, dass** eine Position des elektronischen Geräts ermittelt wird und diese Position mit der automatisch initialisierten Mobilfunkverbindung übermittelt wird.

## Claims

1. Electronic device for installation in a motor vehicle, wherein the electronic device has a radio module (18) for establishing a short range radio connection to an authorized cell phone (2), wherein the authorized cell phone (2) is identified by means of an identifier of the authorized cell phone (2) which is stored in a memory element (28) of the electronic device, **characterized in that** the electronic device also has:
- means for detecting removal of the electronic device from a motor vehicle, and
**in that** the radio module (18) is adapted for establishing a short range radio connection to a further cell phone,
**in that** the electronic device also has:
- means for automatically initializing a mobile radio connection to the further cell phone when an identifier of the further cell phone is to be stored or has been stored for the first time in the memory element (28) after re-activation of the electronic device after removal has been detected,
and **in that** a telephone number which is dialed when the mobile radio connection is automatically initialized is stored in the memory element (28) or a further memory element of the electronic device.

2. Electronic device according to Claim 1, **characterized in that** it is a protected memory element (28).

3. Electronic device according to one of the preceding claims, **characterized in that** the electronic device is configured to transmit the identifier of the further cell phone via the automatically initialized mobile radio connection.

4. Electronic device according to one of the preceding claims, **characterized in that** the means for detecting removal of the electronic device monitor an electronic connection (29) of the electronic device to a voltage supply system, wherein interruption of the voltage supply is evaluated as removal of the electronic device.

5. Electronic device according to Claim 4, **characterized in that** the means for detecting the removal of the electronic device additionally evaluate the time period between the switching off of the ignition of the vehicle and the interruption of the voltage supply.

6. Electronic device according to one of the preceding claims, **characterized in that** the means for detecting the removal of the electronic device have a switch which can be activated mechanically.

7. Electronic device according to one of the preceding claims, **characterized in that** the electronic device contains a position determining module and a position of the electronic device which is determined by means of the position determining module is transmitted with the automatically initialized mobile radio connection.

8. Electronic device according to one of the preceding claims, **characterized in that** the short range of radio connection has a range of not more than 100 m, preferably not more than 10 m.

9. Electronic device according to Claim 1, **characterized in that** the short range radio connection is a bidirectional short range radio connection.

10. Electronic device according to one of the preceding claims, **characterized in that** the short range radio connection is set up using the Bluetooth method.

11. Electronic device according to one of the preceding claims, **characterized in that** the electronic device is embodied as an information device and/or entertainment device, in particular as a car radio (1), navigation system or multimedia device or as a road toll device.

12. Electronic device according to one of the preceding claims, **characterized in that** the electronic device is embodied as a hands free device or as a component of a hands free device.

13. Method for operating an antitheft apparatus of an electronic device for a motor vehicle, wherein the electronic device has a radio module (18) for establishing a short range radio connection to an authorized cell phone (2) which is identified by means of an identifier which is stored in a memory element, and it is checked whether the electronic device is activated after removal of the device (S6) has been detected **characterized by** the further method steps, if this is the case:
- checking whether an identifier of a cell phone is to be stored or has been stored (S7) for the first time in a memory element (28) of the electronic device after removal has been detected, and if this is the case
- automatic establishment of a short range radio connection by means of the radio module (18) of the electronic device to this cell phone (S9) if such a connection does not yet exist, and automatic initialization of a mobile radio connection to this cell phone (S11), wherein a telephone number which is dialed when the mobile radio connection is automatically initialized is stored in the memory element (28) or a further memory element of the electronic device.

14. Method according to Claim 13, **characterized in that** the automatically initialized mobile radio connection is set up to a predefined telephone number.

15. Method according to Claim 13 or 14, **characterized in that** an identifier of the further cell phone is transmitted with the automatically initialized mobile radio connection.

16. Method according to one of the preceding Claims 13 to 15, **characterized in that** a position of the electronic device is determined and this position is transmitted with the automatically initialized mobile radio connection.

## Revendications

1. Appareil électronique prévu pour être monté dans un véhicule automobile, où ledit appareil électronique comporte un module radio (18) permettant d'établir une liaison radio à courte distance vers un téléphone mobile (2) autorisé, le téléphone mobile (2) autorisé étant identifié à l'aide d'un indicatif d'identification du téléphone mobile (2) autorisé stocké dans un élément de mémoire (28) de l'appareil électronique, ledit appareil électronique étant **caractérisé par le fait que** l'appareil électronique comporte en outre:
- des moyens permettant de détecter un démontage de l'appareil électronique pour le sortir d'un véhicule automobile et
- que le module radio (18) est approprié pour établir une liaison radio à courte distance vers un autre téléphone mobile et que l'appareil électronique comporte en outre:
- des moyens permettant d'initialiser automatiquement une liaison de radiotéléphonie mobile avec un autre téléphone mobile lorsque, après une remise en service de l'appareil électronique à la suite de la détection d'un démontage, un indicatif d'identification de l'autre téléphone mobile doit d'abord être mémorisé ou a été mémorisé dans l'élément de mémoire (28)
- et que, dans l'élément de mémoire (28) ou dans un autre élément de mémoire de l'appareil électronique, est mémorisé un numéro de téléphone qui est numéroté lors de l'initialisation automatique de la liaison de radiotéléphonie mobile.

2. Appareil électronique selon la revendication 1, **caractérisé par le fait qu'**il s'agit d'un élément de mémoire (28) protégé.

3. Appareil électronique selon l'une des revendications précédentes, **caractérisé par le fait que** l'appareil électronique est configuré pour la transmission de l'indicatif d'identification de l'autre téléphone mobile par l'intermédiaire de la liaison de radiotéléphonie mobile initialisée automatiquement.

4. Appareil électronique selon l'une des revendications précédentes, **caractérisé par le fait que** les moyens permettant de détecter un démontage de l'appareil électronique contrôlent un raccordement électrique (29) de l'appareil électronique avec un réseau d'alimentation en tension, une interruption de l'alimentation en tension étant évaluée comme démontage de l'appareil électronique.

5. Appareil électronique selon la revendication 4, **caractérisé par le fait que** les moyens permettant de détecter le démontage de l'appareil électronique évaluent, en supplément, le temps qui s'écoule entre la déconnexion de l'allumage du véhicule et l'interruption de l'alimentation en tension.

6. Appareil électronique selon l'une des revendications précédentes, **caractérisé par le fait que** les moyens permettant de détecter le démontage de l'appareil électronique comportent un commutateur pouvant être actionné mécaniquement.

7. Appareil électronique selon l'une des revendications précédentes, **caractérisé par le fait que** l'appareil électronique comporte un module de détermination de position et que, à l'aide de la liaison de radiotéléphonie mobile initialisée automatiquement, est transmise une position de l'appareil électronique déterminée par le module de détermination de position.

8. Appareil électronique selon l'une des revendications précédentes, **caractérisé par le fait que** la liaison radio à courte distance a une portée de moins de 100 m, de préférence, moins de 10 m.

9. Appareil électronique selon la revendication 1, **caractérisé par le fait que** la liaison radio à courte distance est une liaison radio à courte distance bidirectionnelle.

10. Appareil électronique selon l'une des revendications précédentes, **caractérisé par le fait que** la liaison radio à courte distance fonctionne suivant le procédé Bluetooth.

11. Appareil électronique selon l'une des revendications précédentes, **caractérisé par le fait que** l'appareil électronique est conçu comme appareil d'information et/ou appareil de divertissement, notamment sous forme d'autoradio (1), de système de navigation ou d'appareil multimédia ou sous forme d'appareil embarqué (OBU) pour le contrôle du péage.

12. Appareil électronique selon l'une des revendications précédentes, **caractérisé par le fait que** l'appareil électronique est conçu comme dispositif de téléphonie mains libres ou comme composant d'un dispositif de téléphonie mains libres.

13. Procédé permettant d'exploiter un système de protection contre le vol d'un appareil électronique pour véhicule automobile, où l'appareil électronique comporte un module radio (18) permettant d'établir une liaison radio à courte distance vers un téléphone mobile (2) autorisé, ce dernier étant identifié à l'aide d'un indicatif d'identification mémorisé dans un élément de mémoire, et où on contrôle si une mise en service de l'appareil électronique a lieu à la suite de la détection d'un démontage de l'appareil (S6), ledit procédé étant **caractérisé**, si ceci est le cas, par les étapes supplémentaires suivantes:
- contrôler si un indicatif d'identification d'un téléphone mobile doit, après la détection d'un démontage, d'abord être mémorisé ou a été mémorisé (S7) dans un élément de mémoire (28) de l'appareil électronique et, si c'est le cas,
- établissement automatique d'une liaison radio à courte distance au moyen du module radio (18) de l'appareil électronique vers ledit téléphone mobile (S9), si une telle liaison n'existe pas encore, et initialisation automatique d'une liaison de radiotéléphonie mobile avec ce téléphone mobile (S11), un numéro de téléphone, qui est numéroté lors de l'initialisation automatique de la liaison de radiotéléphonie mobile, étant stocké dans l'élément de mémoire (28) ou dans un autre élément de mémoire.

14. Procédé selon la revendication 13, **caractérisé par le fait que** la liaison de radiotéléphonie initialisée automatiquement se fait vers un numéro de téléphone prédéterminé.

15. Procédé selon la revendication 13 ou 14, **caractérisé par le fait qu'**un indicatif d'identification de l'autre téléphone mobile est transmise avec la liaison de radiotéléphonie initialisée automatiquement.

16. Procédé selon l'une des revendications précédentes 13 à 15, **caractérisé par le fait qu'**une position de l'appareil électronique est transmise et que cette position est transmise avec la liaison de radiotéléphonie initialisée automatiquement.
